# EUROPÄISCHE PATENTANMELDUNG

(11) **EP 2 492 399 A2**
(43) Veröffentlichungstag der Anmeldung: **29.08.2012**
(21) Anmeldenummer: 12000832.1
(22) Anmeldetag: 09.02.2012
(51) Int. Cl.: E02B 3/12, E02B 5/02

(54) **Nachhaltig selbsdichtendes schüttbares Abdichtungsmaterial zur Abdichtung von Bodenflächen in situ unter Wasser, insbesondere von geneigten Flächen, beispielsweise Böschungen, von Kanälen oder dergleichen**

(30) Priorität: 24.02.2011 DE 102011012291
(71) Anmelder: Matthäi Bauunternehmen GmbH & Co. KG, 27283 Verden (DE)
(72) Erfinder: Fischer, Jürgen, 27308 Kirchlinteln (DE)
(74) Vertreter: Manasse, Uwe

(57) **Zusammenfassung**

Nachhaltig selbstdichtendes schüttbares Abdichtungsmaterial zur Abdichtung von Bodenflächen in situ unter Wasser, insbesondere von geneigten Flächen, beispielsweise Böschungen von Kanälen oder dergleichen, umfassend ein Gemisch aus einer Vielzahl von, vorzugsweise zumindest im wesentlichen kugelförmigen, ersten Körpern, die jeweils aus einer homogenisierten Mischung aus toniger Erdstoffmasse und mindestens einem bei Kontakt mit Wasser quellenden Quellmaterial bestehen, so dass jeder Körper über sein gesamtes Volumen bei Kontakt mit Wasser quellfähig ist, und einer Vielzahl von, vorzugsweise zumindest im wesentlichen kugelförmigen, zweiten Körpern, die jeweils mindestens ein Stützkorn aus beispielsweise Naturstein, Kunststein oder Recyclingmaterial und einen Mantel mit einer Zusammensetzung wie die ersten Körper aufweisen, sowie Verfahren zur Herstellung desselben und Verfahren zur Abdichtung von Bodenflächen in situ unter Wasser, insbesondere von geneigten Flächen.

## Beschreibung

Die vorliegende Erfindung betrifft ein nachhaltig selbstdichtendes schüttbares Abdichtungsmaterial zur Abdichtung von Bodenflächen in situ unter Wasser, insbesondere von geneigten Flächen, beispielsweise Böschungen von Kanälen oder dergleichen, ein Verfahren zur Herstellung desselben sowie ein Verfahren zur Abdichtung von Bodenflächen in situ unter Wasser, insbesondere von geneigten Flächen, beispielsweise Böschungen von Kanälen oder dergleichen.

Aus der EP 1 935 959 A2 sind ein nachhaltig selbstdichtendes schüttbares Abdichtungsmaterial zur Abdichtung von Bodenflächen in situ unter Wasser, ein Verfahren und eine Vorrichtung zur Herstellung desselben sowie ein Verfahren zur Abdichtung von Bodenflächen in situ unter Wasser bekannt. In gewissen Fällen kann jedoch die Dichtung an geneigten Flächen, wie beispielsweise Böschungen, aufgrund von Kriechvorgängen bezüglich des Abdichtungsmaterials ungenügend sein.

Der Erfindung liegt somit die Aufgabe zugrunde, auch an geneigten Flächen eine ausreichende dauerhafte Dichtung zu ermöglichen.

Erfindungsgemäß wird diese Aufgabe gelöst durch ein nachhaltig selbstdichtendes schüttbares Abdichtungsmaterial zur Abdichtung von Bodenflächen in situ unter Wasser, insbesondere von geneigten Flächen, beispielsweise Böschungen von Kanälen oder dergleichen, umfassend ein Gemisch aus einer Vielzahl von, vorzugsweise zumindest im wesentlichen kugelförmigen, ersten Körpern, die jeweils aus einer homogenisierten Mischung aus toniger Erdstoffmasse und mindestens einem bei Kontakt mit Wasser quellenden Quellmaterial bestehen, so dass jeder Körper über sein gesamtes Volumen bei Kontakt mit Wasser quellfähig ist, und einer Vielzahl von, vorzugsweise zumindest im wesentlichen kugelförmigen, zweiten Körpern, die jeweils mindestens ein Stützkorn aus beispielsweise Naturstein, Kunststein oder Recyclingmaterial und einen Mantel mit einer Zusammensetzung wie die ersten Körper aufweisen. In beiden Alternativen reagiert das Quellmaterial mit der tonigen Erdstoffmasse, indem das Quellmaterial im Laufe der Zeit der tonigen Erdstoffmasse einen Teil des Wassergehaltes entzieht, und es kommt durch mechanische Behandlung zur Granulatbildung.

Weiterhin wird diese Aufgabe gelöst durch ein Verfahren zur Herstellung eines nachhaltig selbstdichtenden schüttbaren Abdichtungsmaterials zur Abdichtung von Bodenflächen in situ unter Wasser, insbesondere von geneigten Flächen, beispielsweise Böschungen von Kanälen oder dergleichen, dadurch gekennzeichnet, dass eine tonige Erdstoffmasse homogenisiert wird, zu Beginn oder im Zuge des Homogenisierungsschrittes mindestens ein bei Kontakt mit Wasser quellendes Quellmaterial und Stützkörner zugesetzt werden und entweder das Homogenisieren so lange fortgesetzt wird, bis die Masse in eine Vielzahl von, vorzugsweise zumindest im wesentlichen kugelförmigen, Körpern zerfallen ist, von denen ein Teil mindestens eines der Stützkörner enthält, oder die Masse nachfolgend in eine Vielzahl von, vorzugsweise zumindest im wesentlichen kugelförmigen, Körpern, von denen ein Teil mindestens eines der Stützkörner enthält, mechanisch zerkleinert wird.

Schließlich wird diese Aufgabe auch gelöst durch ein Verfahren zur Abdichtung von Bodenflächen in situ unter Wasser, insbesondere von geneigten Flächen, beispielsweise Böschungen von Kanälen oder dergleichen, bei dem eine tonige Erdstoffmasse zur Homogenisierung zunächst aufbereitet und anschließend auf die Bodenfläche aufgebracht wird, dadurch gekennzeichnet, dass beim Homogenisieren der tonigen Erdstoffmasse mindestens ein bei Kontakt mit Wasser quellendes Quellmaterial und Stützkörner zugesetzt werden und entweder das Homogenisieren so lange fortgesetzt wird, bis die Masse in eine Vielzahl von, vorzugsweise zumindest im wesentlichen kugelförmigen, Körpern zerfallen ist, von denen ein Teil mindestens eines der Stützkörner enthält, oder die Masse reagieren gelassen und nachfolgend in eine Vielzahl von, vorzugsweise zumindest im wesentlichen kugelförmigen, Körpern, von denen ein Teil mindestens eines der Stützkörner enthält, mechanisch zerkleinert wird.

Gemäß einer besonderen Ausführungsform der Erfindung liegt der bzw. liegen die Durchmesser oder Äquivalentdurchmesser der Vielzahl von Körpern im Bereich von ca. 0 bis 70 mm. Für den Fachmann bedeutet die untere Grenze, dass der Durchmesser oder Äquivalentdurchmesser kleiner als 1 mm sein kann.

Zweckmäßigerweise ist das mindestens eine Quellmaterial Bentonitpulver, Bentonitperlen oder Bentonitpellets.

Die Körper können zweckmäßigerweise mittels Heizschlangen, Heißluft oder Mikrowellen direkt oder indirekt getrocknet werden.

Vorteilhafterweise wird/werden das Quellmaterial und/oder die Stützkörner sukzessive zugesetzt.

Weiterhin kann vorgesehen sein, dass das mechanische Zerkleinern Sieben und/oder Brechen umfasst.

Bei dem Verfahren zur Abdichtung ist das mindestens eine Quellmaterial vorteilhafterweise Bentonitpulver, Bentonitperlen oder Bentonitpellets.

Schließlich kann vorgesehen sein, dass die oder mindestens eine Schutzschicht eine Filterschicht oder eine Schicht aus Wasserbausteinen oder ein Schutzvlies ist.

Der Erfindung liegt die überraschende Erkenntnis zugrunde, dass durch das Vorsehen von Stützkörnern Kriechen von Abdichtungsmaterial verhindert oder aber zumindest reduziert werden kann, wodurch eine ausreichende Dichtung auch an geneigten Flächen realisierbar ist. Durch die Stützkörner werden die auftretenden Kräfte infolge Gravitation, Auflast und sonstigen Einwirkungen so verteilt, dass diese ein Kriechen des Abdichtungsmaterials verhindern. Soweit sich ein Kriechvorgang trotz der vorteilhaften Lasterteilung durch die Stützkörner einstellen sollte, bilden die Stützkörner ein Stützgewölbe, welches ein bereits eingetretenes Kriechen stoppt.

Weitere Merkmale und Vorteile der Erfindung ergeben sich aus den beigefügten Ansprüchen und der nachfolgenden Beschreibung, in der ein Ausführungsbeispiel anhand der schematischen Zeichnungen im einzelnen erläutert ist. Dabei zeigt:
- Figur 1: schematisch den Ablauf eines Verfahrens zur Herstellung eines nachhaltig selbstdichtenden schüttbaren Abdichtungsmaterials zur Abdichtung von Bodenflächen in situ unter Wasser, insbesondere von geneigten Flächen, beispielsweise Böschungen von Kanälen oder dergleichen, gemäß einer besonderen Ausführungsform der Erfindung; und
- Figur 2: eine Schnittansicht von einem Kanal, der gemäß einem Verfahren zur Abdichtung von Bodenflächen in situ unter Wasser gemäß einer besonderen Ausführungsform der Erfindung abgedichtet ist.

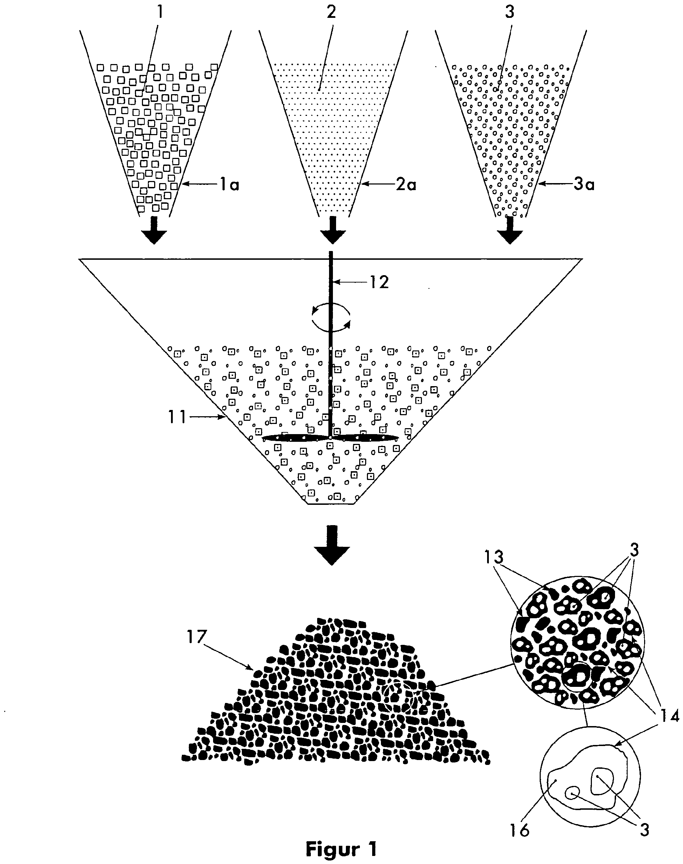

Wie sich anhand der Figur 1 von oben nach unten ergibt, werden tonige Erdstoffmasse 1, Quellmaterial 2 und Stützkörner 3 aus jeweiligen Behältnissen 1a, 2a bzw. 3a, die hier als Trichter dargestellt sind, in einen Mischbehälter 11, der hier als geschlossener Trichter dargestellt ist, mit einer Gerätschaft 12 zur Homogenisierung, die hier beispielhaft als Rührer dargestellt ist, gegeben. Die tonige Erdstoffmasse 1, das Quellmaterial 2 und die Stützkörner 3 können gleichzeitig, aber auch nacheinander zugegeben werden. Durch die Gerätschaft zum Homogenisieren 12 wird das Gemisch aus toniger Erdstoffmasse 1, Quellmaterial 2 und Stützkörnern 3 homogenisiert. Das Homogenisieren wird solange fortgesetzt, bis die (resultierende) Masse eine Vielzahl von, vorzugsweise zumindest im wesentlichen kugelförmigen, ersten Körpern 13 aus einer homogenisierten Mischung aus der tonigen Erdstoffmasse 1 und dem Quellmaterial 2 sowie zweiten Körpern 14, die mindestens ein Stützkorn 3 sowie einen Mantel 16 aus einer homogenisierten Mischung aus der tonigen Erdstoffmasse 1 und dem bei Kontakt mit Wasser 10 quellenden Quellmaterial aufweist. Das entstandene Abdichtungsmaterial 17 wird aus dem Mischbehälter 11 beispielsweise nach unten abgelassen und kann dann zur Abdichtung verwendet werden.

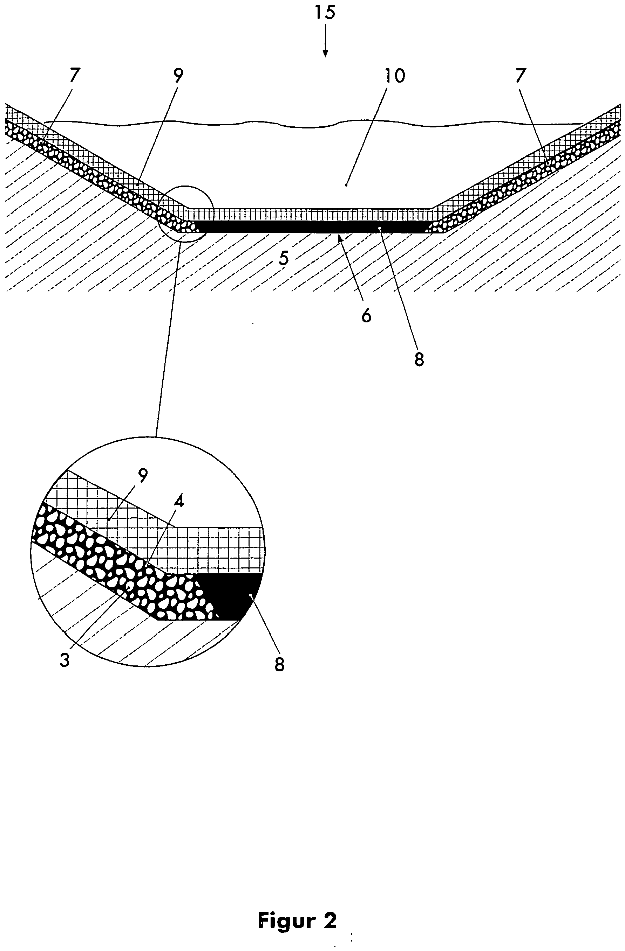

In Figur 2 ist eine aus dem Abdichtungsmaterial 17 hergestellte Abdichtung 7 am Beispiel eines Wasser 10 führenden Kanals 15 mit einem Baugrund bzw. Unterbau 5 gezeigt. Im Bereich der Kanalsohle ist ein Planum 6 vorgesehen. Auf dem Planum 6 befindet sich eine Kanalsohlenabdichtung 8. Diese kann beispielsweise aus einer Vielzahl der ersten Körper 13 bestehen, die jeweils aus einer homogenisierten Mischung aus toniger Erdstoffmasse 1 und mindestens einem bei Kontakt mit Wasser 10 quellenden Quellmaterial 2 bestehen, so dass jeder Körper 13 über sein gesamtes Volumen bei Kontakt mit Wasser 10 quellfähig ist. An den beiden geneigten Flächen des Kanals 15 befindet sich eine Abdichtung 7 aus dem in Verbindung mit Figur 1 beschriebenen Abdichtungsmaterial 17. Auf der Abdichtung 7 ist mindestens eine Schutzschicht 9 vorgesehen.

Die Stützkörner 3 können beispielsweise aus Naturstein, Kunststein oder Recyclingmaterial, wie zum Beispiel Betonrecycling, Schlacke oder ähnliches, bestehen.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 1: tonige Erdstoffmasse
- 1 a: Behältnis
- 2: Quellmaterial
- 2a: Behältnis
- 3: Stützkörner
- 3a: Behältnis
- 5: Baugrund/Unterbau
- 6: Planum
- 7: Abdichtung
- 8: Kanalsohlenabdichtung
- 9: Schutzschicht
- 10: Wasser
- 11: Mischbehälter
- 12: Gerätschaft
- 13, 14: Körper
- 15: Kanal
- 16: Mantel
- 17: Abdichtungsmaterial

## Patentansprüche

1. Nachhaltig selbstdichtendes schüttbares Abdichtungsmaterial (17) zur Abdichtung von Bodenflächen in situ unter Wasser (10), insbesondere von geneigten Flächen, beispielsweise Böschungen von Kanälen (15) oder dergleichen, umfassend ein Gemisch aus einer Vielzahl von, vorzugsweise zumindest im wesentlichen kugelförmigen, ersten Körpern (13), die jeweils aus einer homogenisierten Mischung aus toniger Erdstoffmasse (1) und mindestens einem bei Kontakt mit Wasser (10) quellenden Quellmaterial (2) bestehen, so dass jeder Körper (13) über sein gesamtes Volumen bei Kontakt mit Wasser (10) quellfähig ist, und einer Vielzahl von, vorzugsweise zumindest im wesentlichen kugelförmigen, zweiten Körpern (14), die jeweils mindestens ein Stützkorn (3) aus beispielsweise Naturstein, Kunststein oder Recyclingmaterial und einen Mantel mit einer Zusammensetzung wie die ersten Körper (13) aufweisen.

2. Abdichtungsmaterial (17) nach einem der vorangehenden Ansprüche, **dadurch gekennzeichnet, dass** der bzw. die Durchmesser oder Äquivalentdurchmesser der Vielzahl von Körpern (13, 14) im Bereich von ca. 0 bis 70 mm liegt/liegen.

3. Abdichtungsmaterial (17) nach einem der vorangehenden Ansprüche, **dadurch gekennzeichnet, dass** das mindestens eine Quellmaterial (2) Bentonitpulver, Bentonitperlen oder Bentonitpellets ist.

4. Verfahren zur Herstellung eines nachhaltig selbstdichtenden schüttbaren Abdichtungsmaterials (17) zur Abdichtung von Bodenflächen in situ unter Wasser (10), insbesondere von geneigten Flächen, beispielsweise Böschungen von Kanälen (15) oder dergleichen,
**dadurch gekennzeichnet, dass**
eine tonige Erdstoffmasse (1) homogenisiert wird, zu Beginn oder im Zuge des Homogenisierungsschritts mindestens ein bei Kontakt mit Wasser (10) quellendes Quellmaterial (2) und Stützkörner (3) zugesetzt werden und
entweder das Homogenisieren so lange fortgesetzt wird, bis die Masse in eine Vielzahl von, vorzugsweise zumindest im wesentlichen kugelförmigen, Körpern (13, 14) zerfallen ist, von denen ein Teil mindestens eines der Stützkörner (3) enthält,
oder die Masse nachfolgend in eine Vielzahl von, vorzugsweise zumindest im wesentlichen kugelförmigen, Körpern (13, 14), von denen ein Teil mindestens eines der Stützkörner (3) enthält, mechanisch zerkleinert wird.

5. Verfahren nach Anspruch 4, **dadurch gekennzeichnet, dass** die Körper (13, 14) mittels Heizschlangen, Heißluft oder Mikrowellen direkt oder indirekt getrocknet werden.

6. Verfahren nach Anspruch 4 oder 5, **dadurch gekennzeichnet, dass** das Quellmaterial (2) und/oder die Stützkörner (3) sukzessive zugesetzt wird/werden.

7. Verfahren nach einem der Ansprüche 4 bis 6, **dadurch gekennzeichnet, dass** das mechanische Zerkleinern Sieben und/oder Brechen umfasst.

8. Verfahren zur Abdichtung von Bodenflächen in situ unter Wasser (10), insbesondere von geneigten Flächen, beispielsweise Böschungen von Kanälen (15) oder dergleichen, bei dem eine tonige Erdstoffmasse (1) zur Homogenisierung zunächst aufbereitet und anschließend auf die Bodenfläche aufgebracht wird,
**dadurch gekennzeichnet, dass**
beim Homogenisieren der tonigen Erdstoffmasse (1) mindestens ein bei Kontakt mit Wasser (10) quellendes Quellmaterial (2) und Stützkörner (3) zugesetzt werden und entweder das Homogenisieren so lange fortgesetzt wird, bis die Masse in eine Vielzahl von, vorzugsweise zumindest im wesentlichen kugelförmigen, Körpern (13, 14) zerfallen ist, von denen ein Teil mindestens eines der Stützkörner (3) enthält,
oder die Masse reagieren gelassen und nachfolgend in eine Vielzahl von, vorzugsweise zumindest im wesentlichen kugelförmigen, Körpern (13, 1 4), von denen ein Teil mindestens eines der Stützkörner (3) enthält, mechanisch zerkleinert wird.

9. Verfahren nach Anspruch 9, **dadurch gekennzeichnet, dass** das mindestens eine Quellmaterial (2) Bentonitpulver, Bentonitperlen oder Bentonitpellets ist.

10. Verfahren nach Anspruch 9 oder 10, **dadurch gekennzeichnet, dass** die oder mindestens eine Schutzschicht (9) eine Filterschicht oder eine Schicht aus Wasserbausteinen oder ein Schutzvlies ist.
